# EUROPEAN PATENT APPLICATION

(11) **EP 4 786 115 A1**
(43) Date of publication of application: **05.08.2026**
(21) Application number: 25227139.0
(22) Date of filing: 24.12.2025
(51) Int. Cl.: B25J 9/16

(54) **ROBOT SYSTEM**

(30) Priority: 03.02.2025 JP 2025016001
(71) Applicant: Nachi-Fujikoshi Corp., Tokyo 105-0021 (JP)
(72) Inventor: FUJISAWA, Tatsuro, Toyama, 9308511 (JP)
(74) Representative: Plougmann Vingtoft a/s

(57) **Abstract**

A robot system includes a robot, a controller, and a sensor for monitoring a horizontal range. Prior to operation of the robot, the controller operates the sensor to derive an outset of sensed circumstance surrounding the robot. Subsequent to starting the operation of the robot, the controller recursively performs a monitoring process to obtain a current update of the sensed circumstance. The controller determines if there is any change between the current update of the sensed circumstance and the outset of sensed circumstance. If a change is detected, the controller projects a geometric shape representing the current arm position and a point representing the object onto a projection plane. If the distance between the projected point and the geometric shape is equal to or less than a threshold value, the controller stops the robot.

## Description

### RELATED APPLICATIONS

This application claims priority to Japanese Patent Application No. JP 2025-016001, filed on February 3, 2025, the entire content of which is incorporated herein by reference.

### BACKGROUND OF THE INVENTION

### 1. Field of the Invention

The present invention relates to a robot system equipped with a function to control the robot to avoid contact with humans.

### 2. Description of the Related Art

Conventionally, collaborative robots refer in general to robots that work with human workers in shared workspaces without using safety fences for protecting the human workers. The controller of the collaborative robot is equipped with a function to detect an external force applied upon a collision with a worker or the like during a collaborative operation and to safely stop the robot. For example, Patent Document 1 has disclosed a human-cooperative industrial robot that includes a contact-force detector, which detects a contact force exerted on the robot when the robot comes into contact with a worker, and a contact-force monitor, which, in response to a detection of contact force exceeding a predetermined threshold value, either stops the operation of the robot or moves the robot in a direction that reduces the contact force.

Furthermore, a robot system has been developed with a safety laser scanner, which enables the robot to operate without using the safety fences. In general, the safety laser scanner functions as a safety device that detects an entry of a worker into a preset detection area. The conventional robot system including the safety laser scanner can stop the robot when the controller of the robot receives a signal from the safety laser scanner that alerts an entry of a human into the detection area. With the safety laser scanner used in the way, the robot can be stopped safely before the worker comes into contact with the robot.

### SUMMARY OF THE INVENTION

However, the conventional use of the safety laser scanner to effectively avoid contact with a human worker requires preparatory tasks of comprehensive evaluation of associated risks and establishment of detection areas with consideration given to the movements of the robot. Any change in the movement of the robot necessitates redoing of these preparatory tasks, resulting in increase of workload for preparing the robot to operate.

In addition, the conventional use of the safety laser scanner to effectively avoid contact with a human worker further requires establishment of a detection area that covers all areas and locations the robot arm may possibly move in. The detection area is established so that when a human enters the detection area, the robot will be stopped even if the human and the robot are separated far away from each other, and this reduces the robot's productivity.

The present invention was made in view of the above-mentioned issues. It is an object of the present invention to provide a robot system that can effectively avoid contact with a human without need to perform complicated preparations when there is a change in the movement of the robot.

A robot system according to the present invention includes a robot having an arm, a controller configured to control movement of the robot. The controller includes at least one processor and at least one memory, and a sensor for measuring a distance to an object present in a certain monitoring range that extends in a generally horizontal direction. The memory stores in advance an initial measurement value of the sensor measured in an initial state before starting the movement of the robot. The processor is programmed to execute a monitoring process in regular intervals while the robot is in operation. In the monitoring process, the processor is programmed to acquire a current measurement value of the sensor and determine whether or not there is a change between the current measurement value and the initial measurement value or not. If there is a change, the processor is programmed to calculate a current arm position of the robot, project on a projection plane, which intersects orthogonally with the vertical direction, a point representative of the current measurement value and a geometric shape representative of the current arm position, and determine whether or not a distance between the point representative of the current measurement value and the geometric shape representative of the current arm position is equal to or less than a threshold value. If the distance is equal to or less than the threshold value, the processor is programmed to control the robot to stop its movement.

The sensor may measure the distance to the object by changing a sensing angle within the monitoring range. The memory may store in advance the initial measurement value measured at each angle. The processor may, in the monitoring process, be programmed to acquire the current measurement value measured at each angle and to determine whether or not there is a change between the current measurement value and the initial measurement value measured at each angle.

Also, in the monitoring process, the processor may be programmed to lift stop of the robot's movement if there is no change within the entire monitoring range between the current measurement value and the initial measurement value, or if the distance between the point representative of the current measurement value and the shape representative of the current arm position is greater than the threshold value.

Also, the robot system may further include an operating device operable by a user to control the robot. The processor may be programmed to determine whether or not there is any change between the current measurement value and the initial measurement value in a teaching process of the robot. If there is a change between them, the processor may be programmed to notify the operating device that the robot is passing in the monitoring range, and to wait to receive a request as to whether or not to cancel the monitoring process.

The present invention can provide a robot system that can effectively avoid contact with a human without the need to perform complicated preparations when there is a change in the movement of the robot.

### BRIEF DESCRIPTION OF THE DRAWINGS

FIG. 1 is a view showing an overall configuration of a robot system according to an embodiment of the present invention.
FIG. 2 is a block diagram showing a functional configuration of the robot system of FIG. 1.
FIG. 3 is a flow chart showing an exemplary process for storing an initial-state executed by a controller of FIG. 1.
FIG. 4 is a schematic view for explaining the initial-state storing process of FIG. 3.
FIG. 5 is a flow chart showing an exemplary monitoring process executed by the controller of FIG. 1.
FIG. 6 is a schematic view explaining a process performed at step S15 of FIG. 5.
FIG. 7 is a flow chart showing an exemplary teaching process executed by the controller in FIG. 1.

### DETAILED DESCRIPTION OF THE PREFERRED EMBODIMENTS

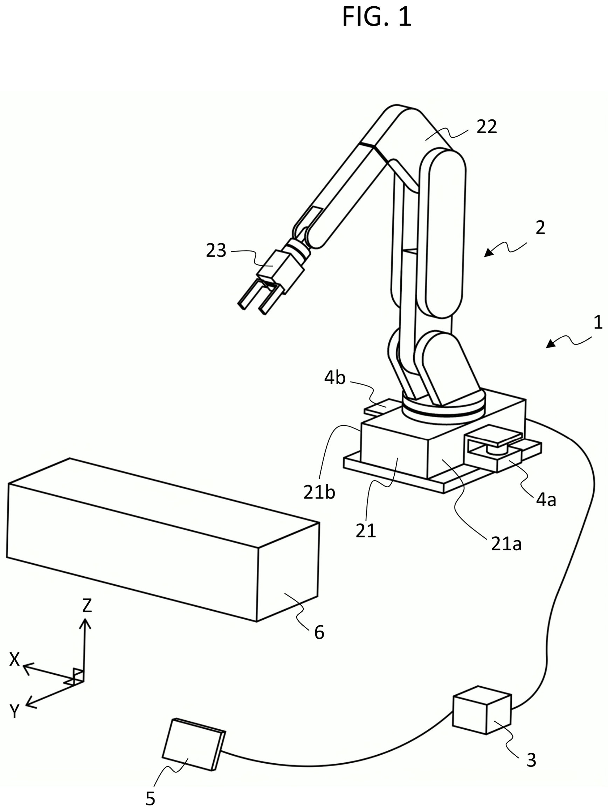

Hereinafter, some embodiments of the present invention will be described with reference to the accompanying drawings. FIG. 1 is a view showing an overall configuration of a robot system according to an embodiment of the present invention. As shown in FIG. 1, a robot system 1 includes a robot 2, a controller 3 for controlling movements of the robot 2, and sensors 4a and 4b for measuring a distance to an object from the position of the robot 2. Examples of the object include a human. Also, the robot system 1 may further include an operating device 5 operable by a user to control the operation of the robot 2. In an example shown in FIG. 1, a workbench 6 having a substantially rectangular parallelepiped shape is installed in front of the robot 2. The workbench 6 may be a table on which a workpiece (not shown) or the like is placed.

The Z axis shown in FIG. 1 shows a vertical direction. The X axis and the Y axis shown in FIG. 1 intersect orthogonally with each other and with the Z axis. That is, a plane formed by the X and Y axes intersects orthogonally with the vertical direction. The robot 2 is installed on a plane that generally intersects orthogonally with the vertical direction.

The robot 2 is a vertical articulated robot with six joints, for example. The robot 2 includes a base 21 installed on a floor or the like, a robot arm 22 that is joined to the base 21, and a tool 23 that is attached to a distal end of the arm 22. The arm 22 is configured with a plurality of joints and a plurality of links movable by link mechanisms. Each joint joins a pair of adjacent links, and is driven by a power mechanism (motor, speed reducer, bearing, gear, etc.) to rotate the pair of links relative to each other. The tool 23 is in the form of a gripping hand that can grip a workpiece or the like, for example. The embodiments of the present invention are implementable with any number of joints or any types of the tool 23 of the robot 2.

The controller 3 may be stored inside the robot 2 or may be installed separately from the robot 2. In addition, the controller 3 may be configured with one controller or more. When it is configured with more than one controller, these controllers are operably connected to each other. In the example shown in FIG. 1, the controller 3 is installed separately from the robot 2, and the controller 3 consists of one controller.

The sensors 4a and 4b each irradiate laser light within a fixed range, called a monitoring range, in a generally horizontal direction (i.e. in a direction generally parallel to the plane on which the robot 2 is installed) and measure distances to an object detected at each of the irradiation angles of the laser light. The sensors 4a and 4b are, for example, safety devices each in the form of a safety laser scanner. The sensors 4a and 4b each project a laser beam light by a projector, each receive by a light receiver a light reflected at the object, and each measure a time interval from the irradiation of the laser beam to the reception thereof to calculate a distance to the position from the sensor position. The sensors 4a and 4b can detect the presences of surrounding objects by calculating the distances to the objects by scanning a fan-shaped area at a scanning angle that is changed little by little. That is, each of the sensors 4a and 4b has its own monitoring range. The monitoring range is segmented at angular intervals, and each of the sensors 4a and 4b is operable to monitor its own monitoring range by sensing one segment after another to collectively sense a circumstance surrounding the robot 2. The sensed circumstance is thus formed with a collection of continuous segmental views captured at the angular intervals by the sensors 4a and 4b. Although FIG. 1 shows two sensors, i.e., the sensors 4a and 4b, there may be only one sensor or three or more sensors provided with the robot 2. The sensors 4a and 4b are placed on the opposite side faces 21a and 21b of the base 21 of the robot 2, for example. The embodiments of the present invention are implementable with the sensors 4a and 4b installed at any locations. Also, the sensors 4a and 4b do not have to be the safety laser scanners and may be ones that emit radio waves such as a millimeter wave radar, as long as the distance to an object can be measured.

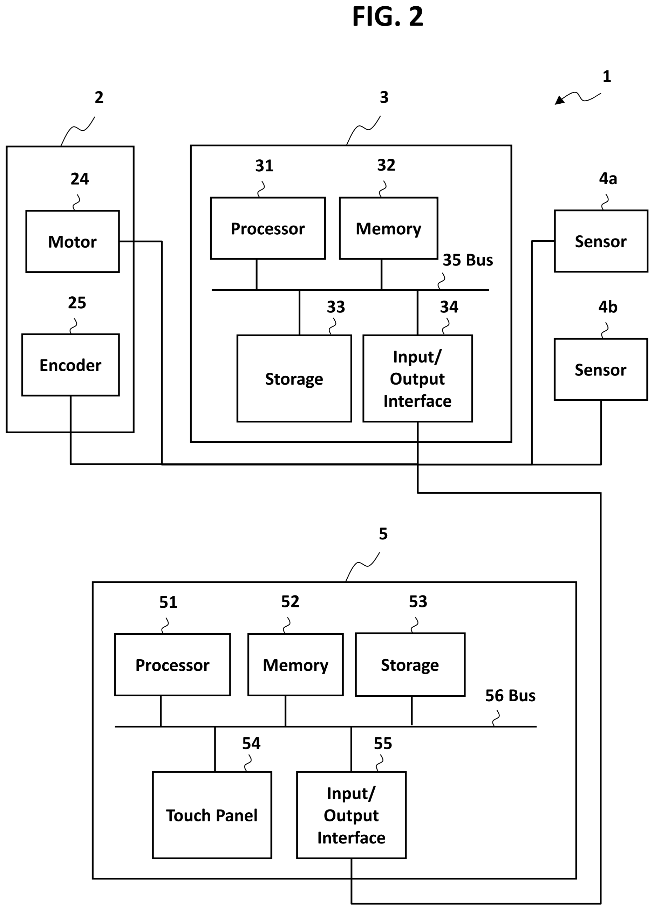

The operating device 5 may be a terminal, such as a teaching pendant, that can be carried by the user. The operating device 5 is used to teach the robot 2 movements necessary to perform a required work and to control the robot 2 to play back the taught movements. The robot 2 operates in a teaching mode or in a playback mode according to instructions from the operating device 5. The operating device 5 may be of a type configured with physical buttons operated to display information on a non-touch panel display or may be of touch-panel types that use a general-purpose tablet terminal with a touch panel display or a mobile terminal such as a smartphone having a touch panel display. The operating device 5 shown in FIG. 2 is of a touch-panel type. Note that the embodiments of the present invention are implementable with any types of the operating device 5.

The controller 3 is operably connected to the robot 2, the sensors 4a and 4b and the operating device 5. The controller 3 may be connected to these devices wirelessly or via a wired communication cable.

FIG. 2 is a block diagram showing a functional configuration of the robot system in FIG. 1. The robot 2 includes, at each of the joints thereof, a motor 24 that rotates according to instructions from the controller 3, and an encoder 25 that detects a rotational angle of the motor 24 and outputs to the controller 3 an axial angle of each joint axis.

The controller 3 has a processor 31, a memory 32, a storage 33, and an input/output interface 34 that are connected to each other via a bus 35. The processor 31 is formed with a CPU (Central Processing Unit) or the like and reads out a computer program stored in advance in the storage 33 or the like, deploys the computer program in the memory 32 and sequentially executes a plurality of commands of the deployed computer program. The memory 32 is formed with a volatile memory such as a semiconductor memory, and takes the form of a storage device, to or from which the processor 31 can directly read and write data. The storage 33 is formed with a computer-readable non-transitory storage medium such as a hard disk drive, solid state drive, or USB (Universal Serial Bus) memory, and stores computer programs and data therein. The input/output interface 34 functions as an external connection device used for inputting and outputting signals to and from the robot 2, the sensors 4a and 4b, the operating device 5 and the like.

The operating device 5 incudes a processor 51, a memory 52, a storage 53, a touch panel 54, and an input/output interface 55 that are connected to each other via a bus 56. Since the processor 51, the memory 52, and the storage 53 are configured similarly to the processor 31, the memory 32, and the storage 33, respectively, descriptions thereof are omitted. The touch panel 54 functions as an input device integrated with a display device such as a liquid crystal display and displays data as well as receives data input through touch operations. The input/output interface 55 functions as an external connection device used for inputting and outputting signals to and from the controller 3 and the like. Although not shown in FIG. 2, the operating device 5 also includes an emergency stop switch that is operated to stop the robot 2 in an emergency, and an enable switch that is operated to resume the operation of the robot 2.

The functions of the controller 3 and the operating device 5 may be realized at least in part by a logic circuit or an analog circuit. Also, the controller 3 and the operating device 5 may execute various programs using an electronic circuit such as an FPGA (Field Programmable Gate Array). The controller 3 and the operating device 5 may further include devices, such as a wireless communication device and a speaker not shown in FIG. 2.

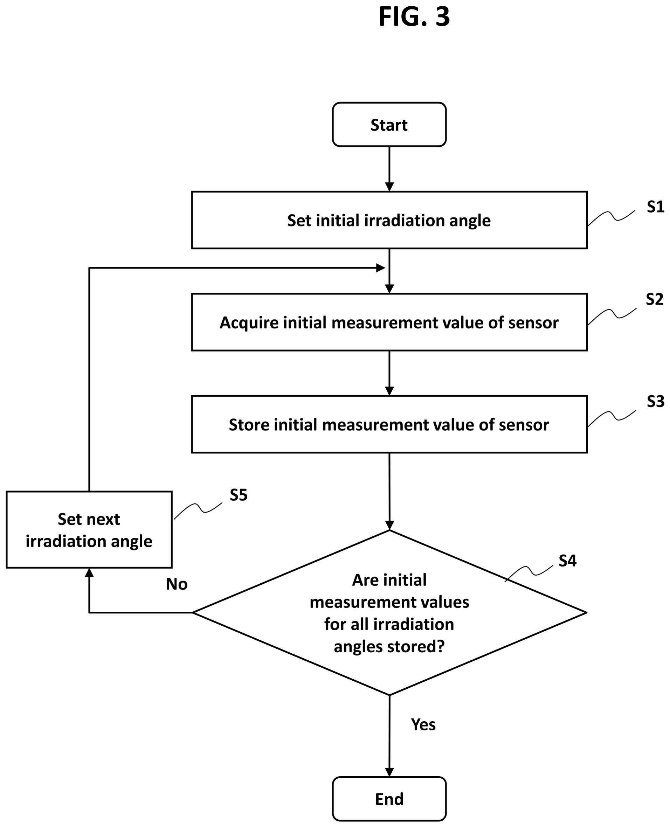

FIG. 3 is a flow chart showing an exemplary initial-state storing process executed by the controller in FIG. 1. The initial-state storing process is performed by the controller 3, before the robot starts its operation, to store an initial measurement value indicative of a distance to an object measured at each of the irradiation angles of laser light of the sensor 4a (or 4b). The controller 3 executes the process shown in FIG. 3 for each of the sensors 4a and 4b. That is, the controller 3 separately operates the sensors 4a and 4b to sense the monitoring range by the sensor 4a and then by the sensor 4b, prior to operation of the robot 2, to collectively derive an outset of sensed circumstance surrounding the robot 2.

As shown in FIG. 3, the processor 31 of the controller 3 sets an initial irradiation angle for the sensor 4a, for example (step S1). Next, the processor 31 acquires an initial measurement value of the sensor 4a (step S2) and stores the initial measurement value of the sensor 4a in the storage 33 (step S3). Then, the processor 31 checks whether or not the initial measurement value has been stored for all of the irradiation angles for the sensor 4a (step S4). If the initial measurement value has not been stored for all of the irradiation angles ('No' in step S4), the processor 31 sets a next irradiation angle for the sensor 4a (step S5) and repeats the loop consists of steps S2, S3 and S4. On the other hand, if the initial measurement value has been stored for all the irradiation angles for the sensor 4a ('Yes' in step S4), the processor 31 starts step S1 to set an initial irradiation angle for the sensor 4b and repeats the loop formed by steps S2, S3, S4 and S5 for the sensor 4b to recursively sense at one irradiation angle after another until a judgement in step S4 becomes 'Yes'. After both the sensors 4a and 4b complete their sensing at all of the irradiation angles, the processor 31 terminates the process shown in Fig. 3 after the judgement performed in step S4 becomes 'YES' for both the sensors 4a and 4b.

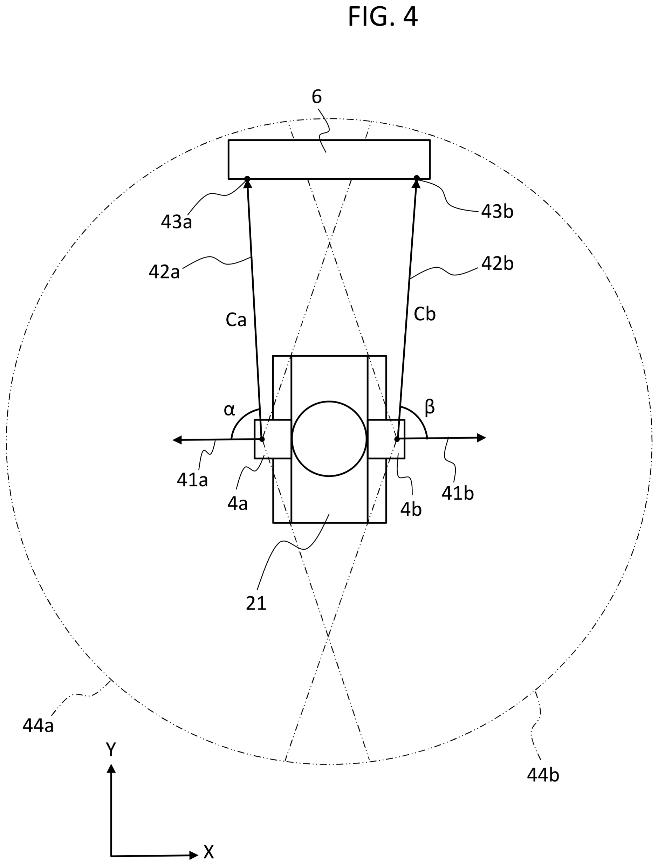

FIG. 4 is a schematic view explaining the initial-state storing process shown in FIG. 3. FIG. 4 does not show the arm 22 and the tool 23 of the robot 2, the controller 3, and the operating device 5 but only shows the base 21 and the sensors 4a and 4b of the robot 2, and the workbench 6. The maximum irradiation angle range of the sensors 4a and 4b is 270°, for example, and, since the sensors 4a and 4b are installed on the opposite side faces 21a and 21b of the base 21, the sensors 4a and 4b can collectively monitor almost the entire angles or a circumstance surrounding the robot 2. Even where the sensors 4a and 4b are installed distant from the robot 2, the sensors 4a and 4b positioned opposite to each other with respect to the robot 2 can monitor almost the entire angles surrounding the robot 2.

The irradiation angles of the sensors 4a and 4b are shown as angles α and β formed between reference directions 41a and 41b and laser light irradiation directions 42a and 42b, respectively. Monitoring ranges 44a and 44b of the sensors 4a and 4b are defined by monitoring distances (within the maximum irradiation distances of the sensors 4a and 4b) and monitoring angle ranges (within the maximum irradiation angle ranges of the sensors 4a and 4b). Measured values Ca and Cb of the sensors 4a and 4b represent distances from the irradiation positions of the laser lights to points 43a and 43b at which the laser lights are reflected by the object. The measured values Ca and Cb of the sensors 4a and 4b shown in FIG. 4 represent the distances to the workbench 6. When there is no object present in the monitoring distance, the measured values Ca and Cb of the sensors 4a and 4b are equal to the monitoring distance. Note that the monitoring ranges 44a and 44b extend also in the Z axis by predetermined irradiation angle ranges of laser light emission parts of the sensors 4a and 4b taken as the center.

Through the process in FIG. 3, the controller 3 stores in advance the initial measurement value of the sensor 4a (or 4b) in the initial state before the robot 2 starts its movement. The processor 31 of the controller 3 stores the measured value Ca (or Cb) as a polar coordinate (α, Ca) (or (β, Cb)) in the storage 33, for example. Although the process shown in FIG. 3 is performed every time the environment surrounding the robot 2 is changed, since the controller automatically performs such the process, the user does not have to make any complicated preparations.

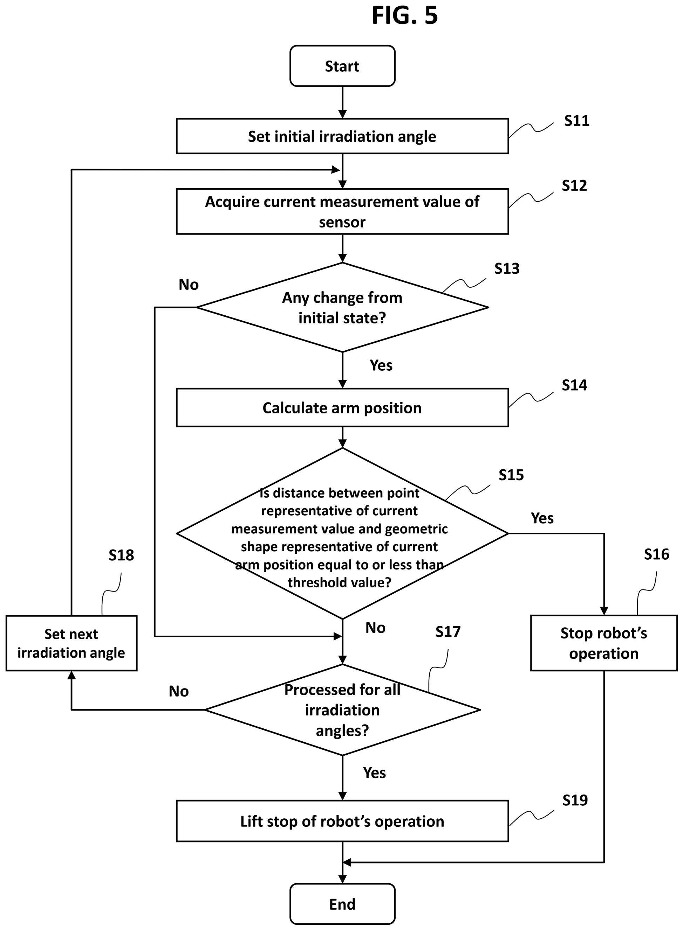

FIG. 5 is a flow chart showing an exemplary monitoring process executed by the controller in FIG. 1. The controller 3 executes the monitoring process shown in FIG. 5 at a regular processing interval during the operation of the robot 2. That is, subsequent to starting the operation of the robot 2, the controller 3 recursively performs the monitoring process at the regular processing interval. To execute the monitoring process shown in FIG. 5, the controller 3 stores in the storage 33 link parameters and information of a shape (such as dimensions of each parts and weight) of the arm 22 of the robot 2, as well as installation positions of the sensors 4a and 4b. The link parameters include a distance between the links, a link twist angle, and a link length, which are represented by DH parameters derived by the Denavit - Hartenberg convention (D-H convention). The installation positions of the sensors 4a and 4b are represented, for example, by coordinates in a robot coordinate system (Xr, Yr, Zr) of the robot 2. The processor 31 of the controller 3 reads out such data from the storage 33 and deploys the data in the memory 32 before executing the monitoring process shown in FIG. 5.

As performed in the process shown in Fig. 3, the controller 3 performs the monitoring process shown in Fig. by first performing sensing by the sensor 4a at one irradiation angle after another to complete sensing of the monitoring range 44a and then performing sensing by the sensor 44b at one irradiation angle after another to complete sensing of the monitor range 44b to thereby complete sensing of the circumstance surrounding the robot 2. The controller 3 operates the sensors 4a or 4b to sense the monitoring ranges 44a (or 44b) at intervals to recursively update the sensed circumstance surrounding the robot 2. A current update of the sensed circumstance includes an object present in the monitoring ranges 44a (or 44b). Then, the controller 3 determines if there is any change between the current update of the sensed circumstance and the outset of the sensed circumstance obtained by the process shown in Fig. 3. Specifically, the controller 3 repeatedly compares two corresponding segmental views throughout collections of continuous segmental views between the current update of the sensed circumstance and the outset of the sensed circumstance to determine if there is any change between the current update of the sensed circumstance and the outset of the sensed circumstance.

Returning to FIG. 5, the processor 31 of the controller 3 sets an initial irradiation angle for the sensor 4a, for example (step S11). Next, the processor 31 acquires a current measurement value of the sensor 4a (step S12) and determines whether or not the initial state has been changed (step S13). Specifically, the processor 31 determines whether or not there is a change between the current measurement value of the sensor 4a and the initial measurement value of the sensor 4a measured at the same irradiation angle. If there is a change between the current measurement value and the initial measurement value ('Yes' in step S13), the processor 31 proceeds to step S14, and if there is no change between them ('No' in step S13), the processor 31 proceeds to step S17. Even if the result of the determination process performed in step S13 finds that the robot 2 has just moved toward the object, e.g., the workbench 6, which is present in the initial state, the operation of the robot 2 does not have to be stopped.

In response to a determination that there is a change between the current update of the sensed circumstance and the outset of the sensed circumstance, the controller 3 calculates a current arm position of the robot 2. In step S14, the processor 31 acquires from the robot 2 each of the axial angles and executes a forward kinematics calculation using each the acquired axial angles, the link parameters, and the data of the arm shape. Then, the processor 31 analytically calculates the positions of the parts (each joint axis, the tool 23, etc.) of the robot 2 and further calculates a current arm position in the robot coordinate system (Xr, Yr, Zr) of the robot 2. The current arm position is represented by a coordinate of the center of the tip end of the tool 23 called a tool center point (TCP). Also, the current arm position may not necessarily be represented by one point and may also be represented by the position of each joint axis in addition to the TCP position.

Next, the controller 3 projects on a projection plane a geometric shape representative of the calculated current arm position of the robot 2 and further projects on the projection plane a point representative of the object included in the current update of the sensed circumstance. Then, the controller 3 determines if a distance in the projection plane between the point projected on the projection plane and the geometric shape projected on the projection plane is equal to or less than a threshold value. The processor 31 checks whether or not a distance between the object position determined according to the current measurement value measured in step S13 and the current arm position calculated in step S14 is equal to or less than the threshold value (step S15).

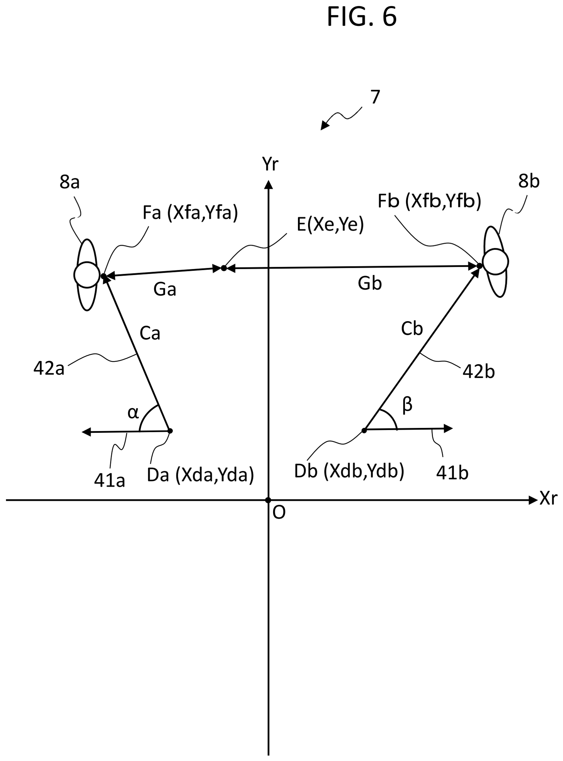

FIG. 6 is a schematic view explaining the process of step S15 shown in FIG. 5. The controller 3 defines a two-dimensional projection plane in which the controller 3 recognizes a spatial relationship between the object and the arm 22. A projection plane 7 shown in FIG. 6 is a two-dimensional projection plane that extends in a direction generally parallel to the plane on which the robot 2 is installed. Specifically, the projection plane 7 shown in FIG. 6 is generally perpendicular to the vertical direction and is coplanar with a plane formed by the Xr and Yr axes orthogonal to the Zr axis in the robot coordinate system (Xr, Yr, Zr) of the robot 2, for example. That is, the projection plane 7 extends in parallel to a floor on which the robot 2 is placed, and a point and a geometric shape are projected in perpendicular on the projection plane 7.

Da (Xda, Yda) and Db (Xdb, Ydb) represent points at which the sensors 4a and 4b are installed, respectively. E (Xe, Ye) represents a point at which the vertical line drawn from the current arm position measured in step S14 intersects with the projection plane 7. The processor 31 converts polar coordinates of the current measurement values (α, Ca) and (β, Cb) of the sensors 4a and 4b into Cartesian coordinates to be projected onto the projection plane 7. Fa (Xfa, Yfa) and Fb (Xfb, Yfb) represent points that are determined based on the current measurement values of the sensors 4a and 4b. Fa (Xfa, Yfa) and Fb (Xfb, Yfb) are projected that are shifted by the processor 31 from an origin O by the coordinates Da (Xda, Yda) and Db (Xdb, Ydb) indicating the installation positions of the sensors 4a and 4b.

Then, the processor 31 calculates distances Ga and Gb between the points Fa (Xfa, Yfa) and Fb (Xfb, Yfb) based on the current measurement values and the point E (Xe, Ye) based on the current arm position and determines whether or not the distances Ga and Gb are equal to or less than the threshold value. Both the positions of objects 8a and 8b are shown in FIG. 6 to be within a movable range of the arm 22 of the robot 2. Since the object 8a is placed close to the arm position, the operation of the robot 2 needs to be stopped to protect the object 8a. On the other hand, since the object 8b is sufficiently distant from the arm position, the operation of the robot 2 needs not to be stopped to protect the object 8b.

In FIG. 6, the processor 31 projects points on the projection plane 7 based on the current arm position. However, a line, a circle, an ellipse, a polygon, or the like may be projected on the projection plane 7, alternative to points. For example, the processor 31 may calculate the TCP and positions of each joint axis as the current arm position, and a line connecting the TCP and each joint axis, a circle, an ellipse, a polygon, or the like representing the shape of the arm 22 may be projected on the projection plane 7.

In other words, the processor 31 projects points representative of the current measurement values and a geometric shape representative of the current arm position on the projection plane 7 and determines whether or not the distances between the points representative of the current measurement values and the geometric shape representative of the current arm position are equal to or less than the threshold value. The geometric shapes used to represent the arm position include planar geometries such as a point, a line, a circle, an ellipse, and a polygon. The distance is, for example, the shortest Euclidean distance between the point and the geometric shape.

Returning to FIG. 5, in response to a determination that the determined distance is equal to or less than the threshold value, the controller 3 controls the robot 2 to stop the operation of the robot 2. If the distance between the point representative of the current measurement value and the geometric shape representative of the current arm position is equal to or less than the threshold value ('Yes' in step S15), the processor 31 sends to the robot 2 a command to stop the operation of the robot 2 (step S16) and terminates the process. On the other hand, if the distance between the point representative of the current measurement values and the geometric shape representative of the current arm position is greater than the threshold value ('No' in step S15), the processor 31 proceeds to step S17.

The controller 3 lifts stop of the operation of the robot 2 in response to a determination that there is no change between the current update of the sensed circumstance and the outset of the sensed circumstance or a determination that the distance in the projection plane 7 between the point projected on the projection plane 7 and the geometric shape projected on the projection plane 7 is greater than the threshold value. In step S17, the processor 31 checks whether or not the process from step S12 to step S16 has been performed for all of the irradiation angles. If the process has not been completed for all of the irradiation angles ('No' in step S17), the processor 31 sets a next irradiation angle (step S18), and repeats the process from step S12. On the other hand, if the process has been completed for all of the irradiation angles ('Yes' in step S17), the processor 31 sends the robot 2 a command to lift the stop of the operation of the robot 2 (step S19) and terminates the process. That is, when there is no change between the current measurement value and the initial measurement value or when the distance between the point representative of the current measurement value and the geometric shape representative of the current arm position is greater than the threshold value for all of the irradiation angles of the sensors 4a and 4b, the processor 31 lifts the stop of the operation of the robot 2. In this way, the controller 3 can automatically restart the operation of the robot 2 when the object and the robot 2 move away from each other.

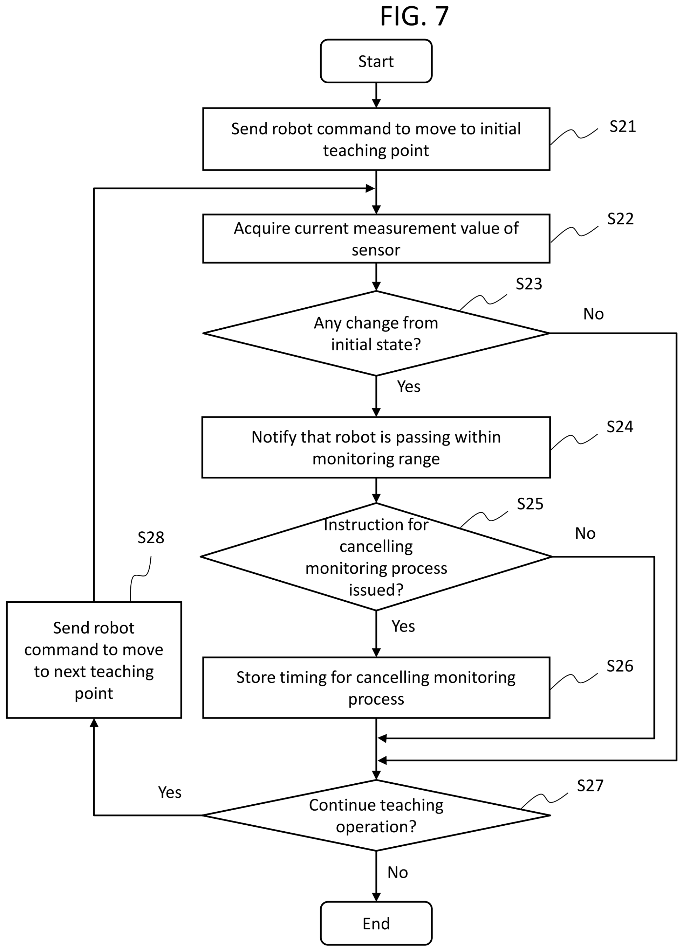

FIG. 7 is a flowchart showing an exemplary teaching process executed by the controller in FIG. 1. If the robot 2 moves to a position that blocks the laser light of the sensor 4a or 4b during the monitoring process in FIG. 5, the controller 3 stops the operation of the robot 2, so that the robot 2 becomes unable to perform requested movements. Thus, in the teaching process shown in FIG. 7, if the user teaches the robot 2 to move to a position that blocks the laser light of the sensor 4a (or 4b), the controller 3 receives, via the operating device 5, an inquiry as to whether or not to cancel the monitoring process of FIG. 5. That is, the controller 3 determines whether or not there is a change between the current update of the sensed circumstance and the outset of the sensed circumstance obtained during a teaching process of the robot 2, and, in response to a determination that there is a change between them, notifies the operating device 5 that the robot 2 is passing within the monitoring range 44a (or 44b) and waits to receive a request as to whether or not to cancel the monitoring process.

As shown in FIG. 7, according to an instruction from the operating device 5, the processor 31 of the controller 3 sends to the robot 2 a command to move to an initial teaching point (step S21). Next, the processor 31 acquires the current measurement value of the sensor 4a (or 4b) (step S22), and checks whether or not the initial state has changed (step S23). Specifically, similarly to the process of step S13 in FIG. 5, the processor 31 determines whether or not there is a change between the current measurement value of the sensor 4a (or 4b) and the initial measurement value measured at the same irradiation angle. The processor 31 executes the processes of step S22 and S23 for all of the irradiation angles. Then, if there is a change between the current measurement value and the initial measurement value measured at any of the irradiation angles ('Yes' in step S23), the processor 31 proceeds to step S24. If there is no change measured at all of the irradiation angles ('No' in step S23), the processor 31 proceeds to step S27.

In step S24, the processor 31 notifies the operating device 5 that the robot 2 passes within the monitoring range 44a (or 44b) (step S24). On the other hand, the processor 51 of the operating device 5 displays on the touch panel 54 that the robot 2 passes within the monitoring range 44a (or 44b). Then, the processor 51 receives via the touch panel 54 an instruction from the user as to whether or not to cancel the monitoring process.

The processor 31 checks whether or not the instruction to cancel the monitoring process is issued (step S25). If the instruction to cancel is issued ('Yes' in step S25), the processor 31 stores a timing of cancelling the monitoring process (step S26) and proceeds to step S27. For example, the processor 31 stores in the storage 33, as the timing to cancel the monitoring process, a transition of the movement from the previous teaching point through the current teaching point. If no instruction to cancel is issued ('No' in step S25), the controller 3, performing no actions, proceeds to step S27. Alternatively, before proceeding to step S27, the controller 3 may receive an instruction to reset the current teaching point and repeat the process from step S22.

In step S27, the processor 31 checks whether or not to continue the teaching operation. If the teaching operation needs to continue ('Yes' in step S27), the processor 31 sends the robot 2 a command to move to a next teaching point according to the instruction from the operating device 5 (step S28) and repeats the process from step S22. On the other hand, if the teaching operation does not need to continue ('No' in step S27), the processor 31 terminates the process.

If the controller 3 receives a timing to cancel the monitoring process in the teaching process in FIG. 7, while moving the robot 2 according to the taught movements, the controller 3 does not perform the monitoring process at the receipt of the cancellation command. At the receipt of the cancellation command, the controller 3 may, for example, issue a warning sound indicating that cancellation is in progress, or may slow down the moving speed of the robot 2.

Although in FIG. 7, the controller 3 notifies at each teach point that the robot 2 is passing within the monitoring range 44a (or 44b), the controller 3 may notify a timing of the robot 2 to pass within the monitoring range 44a (or 44b) after all of the teaching points are set. For example, when the instruction is received from the operating device 5 to play back all of the taught movements, the controller 3 executes step S22 and step S23 in FIG. 7 at a regular time interval and stores the timing at which the robot 2 passes within the monitoring range 44a (or 44b). Then, after the playback of all of the taught movements is completed, the controller 3 sends the operating device 5 a timing for the robot 2 to pass within the monitoring range 44a (or 44b). The operating device 5 shows to the user the timing for the robot 2 to pass within the monitoring range 44a (or 44b), and waits to receive a timing to cancel the monitoring process or an instruction to reset the teaching points.

As described above, the robot system 1 according to the embodiment of the present invention includes the robot 2, the controller 3, and the sensors 4a and 4b that each measure the distance to the object within the monitoring ranges 44a (or 44b) that extends in a generally horizontal direction. The controller 3 acquires the current measurement value of the sensor 4a (or 4b), calculates the current arm position of the robot 2, and projects the point representative of the current measurement value and the geometric shape representative of the current arm position on the projection plane that is generally parallel to the plane intersecting orthogonally with the vertical direction. Then, the controller 3 determines whether or not the distance between the point representative of the current measurement value and the geometric shape representative of the current arm position is equal to or less than the threshold value. If the distance is equal to or less than the threshold value, the controller 3 performs the monitoring process to stop the operation of the robot 2. This process makes possible to control the robot 2 to effectively avoid contact with a human without performing complicated preparations each time the operation of the robot 2 is changed. In particular, even if a human enters the movable range of the robot 2, the operation of the robot 2 is not stopped as long as the robot 2 is sufficiently distant from the human, resulting in that the productivity of the robot 2 is prevented from going down.

Also, the controller 3 stores in advance the initial measurement values of the sensors 4a and 4b measured in the initial state before the robot 2 starts its operation. Then, the controller 3 determines during the monitoring process whether or not there is a change between the current measurement value and the initial measurement value. If there is a change between them, the controller determines whether or not the distance between the point representative of the current measurement value and the geometric shape representative of the current arm position is equal to or less than the threshold value. If the distance is equal to or less than the threshold value, the controller 3 stops the operation of the robot 2. Although the initial-state storing process for storing in advance the initial measurement value needs to be performed every time the environment surrounding the robot 2 is changed, since the initial-state storing process is automatically performed by the controller 3, complicated preparations by the user can be eliminated, and the burden on the user can be reduced.

Also, if it is determined during the monitoring process that there is no change between the current measurement value and the initial measurement value in all of the monitoring range 44a (or 44b) or if the distance between the point representative of the current measurement value and the geometric shape representative of the current arm position is greater than the threshold value, the controller 3 lifts the stop of the operation of the robot 2. With this process, even after the operation of the robot 2 is stopped, the controller 3 can automatically restart the operation of the robot 2 when the human moves sufficiently distant from the robot 2.

Also, the robot system 1 further includes the operating device 5, which is operated by the user to control the robot 2. The controller 3 determines during the teaching process whether or not there is a change between the current measurement value and the initial measurement value. If there is a change between them, the controller 3 then notifies the operating device 5 that the robot 2 passes within the monitoring ranges 44a (or 44b) of the laser light of the sensor 4a (or 4b) and receives an instruction as to whether or not to cancel the monitoring process. With this process, even if the user teaches the robot 2 to move to a position at which the laser light of the sensor 4a (or 4b) is blocked, the operation of the robot 2 does not have to be stopped, resulting in increasing the degree of freedom of movements taught to the robot 2.

Note that the controller 3 may also use other types of external force detection process or may use, in addition to the detection process described above, an approach/contact monitoring process using other non-contact sensors or the like. With this configuration, even if a single detection process has a blind area where a view of an object is blocked, a collection of multiple detection processes can eliminate blind areas by one another among the detection processes.

Although the preferred embodiments of the robot system and the like according to the present invention have been described above with reference to the accompanying drawings, the present invention is not limited to these examples. It is obvious for those skilled in the art that various modification examples or correction examples may be conceived of within the range of the technical idea disclosed in the present application, and it is understood that they will also naturally fall within the technical scope of the present invention.

## Claims

1. A robot system comprising:
a robot having a robot arm;
a sensor operable to sense a monitoring range that extends in a generally horizontal direction, wherein the sensor is operable to measure a distance to an object that is present in the monitoring range;
a controller comprising at least one processor and at least one memory and programmed to control operation of the robot, wherein the controller defines a two-dimensional projection plane in which the controller recognizes a spatial relationship between the object and the robot arm,
wherein the at least one processor is programmed to implement:
(a) operating the sensor to sense the monitoring range, prior to operation of the robot, to derive an outset of sensed circumstance surrounding the robot; and
(b) subsequent to starting the operation of the robot, recursively performing a monitoring process, wherein the monitoring process comprises:
(b-1) operating the sensor to sense the monitoring range at intervals to recursively update the sensed circumstance surrounding the robot, wherein a current update of the sensed circumstance includes an object present in the monitoring range;
(b-2) determining if there is any change between the current update of the sensed circumstance and the outset of the sensed circumstance;
(b-3) in response to a determination that there is a change between the current update of the sensed circumstance and the outset of the sensed circumstance, calculating a current arm position of the robot;
(b-4) projecting on the projection plane a geometric shape representative of the calculated current arm position of the robot and further projecting on the projection plane a point representative of the object included in the current update of the sensed circumstance;
(b-5) determining if a distance in the projection plane between the point projected on the projection plane and the geometric shape projected on the projection plane is equal to or less than a threshold value; and
(b-6) in response to a determination that the determined distance is equal to or less than the threshold value, controlling the robot to stop the operation of the robot.

2. The robot system according to claim 1, wherein the monitoring range is segmented at angular intervals, and the sensor is operable to sense the monitoring range at one segment after another, wherein each sensed circumstance is formed with a collection of continuous segmental views captured at the angular intervals,
the at least one processor is programmed to implement the process (b-2) so that the process (b-2) comprises repeatedly comparing two corresponding segmental views throughout collections of continuous segmental views in the current update of the sensed circumstance and the outset of the sensed circumstance to determine if there is any change between the current update of the sensed circumstance and the outset of the sensed circumstance.

3. The robot system according to claim 1, wherein
the at least one processor is further programmed to implement a process of lifting stop of the operation of the robot in response to a determination that there is no change between the current update of the sensed circumstance and the outset of the sensed circumstance or a determination that the distance in the projection plane between the point projected on the projection plane and the geometric shape projected on the projection plane is greater than the threshold value.

4. The robot system according to claim 1, the robot system further comprising:
an operating device operable by a user to control movements of the robot, wherein the at least one processor is further programmed to implement a process of determining whether or not there is a change between the current update of the sensed circumstance and the outset of the sensed circumstance obtained during a teaching process of the robot, and, in response to a determination that there is a change between them, notifying the operating device that the robot is passing within the monitoring range and wait to receive a request as to whether or not to cancel the monitoring process.

5. The robot system according to claim 1, wherein the projection plane extends in parallel to a floor on which the robot is placed, and the point and the geometric shape are projected in perpendicular on the projection plane.
